# EUROPÄISCHE PATENTANMELDUNG

(11) **EP 1 653 377 A1**
(43) Veröffentlichungstag der Anmeldung: **03.05.2006**
(21) Anmeldenummer: 05009422.6
(22) Anmeldetag: 29.04.2005
(51) Int. Cl.: G06F 17/30, H04L 29/08

(54) **Verfahren und Server zur Erzeugen einer Netzwerk-Seite eines Client-Server-Netzwerks**

(30) Priorität: 29.10.2004 DE 102004053513
(71) Anmelder: HURRA Communications GmbH, 70599 Stuttgart (DE)
(72) Erfinder: Schweier, René, 70599 Stuttgart (DE)
(74) Vertreter: Wörz, Volker Alfred

(57) **Zusammenfassung**

Die Erfindung betrifft ein Verfahren und einen Server (36) eines Client-Server-Netzwerks (10) zum Erzeugen einer Netzwerk-Seite des Client-Server-Netzwerks (10) mit einem bestimmten Inhalt. Der Server (36) empfängt eine eine Netzwerk-Adresse (URL) der Netzwerk-Seite umfassende Anfrage von einem Client (1a, 1b; 15a, 15b) des Client-Server-Netzwerks (10). Um das automatische dynamische Generieren einer kompletten Netzwerk-Seite dahingehend zu verbessern, dass der Client (1a, 1b; 15a, 15b) nicht erkennt, dass es sich um eine dynamische Netzwerk-Seite handelt, wird vorgeschlagen, dass
- der Server (36) Informationen der Netzwerk-Seite aus einer Datenbank (27) anfordert, die über das Client-Server-Netzwerk (10) zugänglich ist, wobei die Informationen zumindest einen Teil des Inhalts der Netzwerk-Seite darstellen;
- der Server (36) die angeforderten Informationen über das Client-Server-Netzwerk (10) empfängt;
- der Server (36) den Inhalts der Netzwerk-Seite anhand der empfangenen Informationen dynamisch generiert; und
- den dynamisch generierten Inhalt der Netzwerk-Seite an den Client (1a, 1b; 15a, 15b) übermittelt,
- wobei die angeforderten Informationen unter der Netzwerk-Adresse und/oder der Top-Level-Domain des Servers (36) an den Client (1a, 1b) übermittelt werden.

## Beschreibung

Die vorliegende Erfindung betrifft ein Verfahren zum Erzeugen einer Netzwerk-Seite eines Client-Server-Netzwerks mit einem bestimmten Inhalt. Dabei empfängt ein Server des Client-Server-Systems von einem Client des Client-Server-Netzwerks eine Anfrage mit einer Netzwerk-Adresse (URL) der Netzwerk-Seite.

Die Erfindung betrifft außerdem einen Server eines Client-Server-Netzwerks zum Erzeugen einer Netzwerk-Seite des Client-Server-Netzwerks mit einem bestimmten Inhalt. Der Server weist Mittel zum Empfangen einer eine Netzwerk-Adresse (URL) der Netzwerk-Seite umfassenden Anfrage von einem Client des Client-Server-Netzwerks auf.

Ganz allgemein betrachtet, betrifft die vorliegende Erfindung die Informationsverwaltung und Informationssuche in Client-Server-Netzwerken. Genauer gesagt, betrifft die vorliegende Erfindung das dynamische Erzeugen von Inhalten von Netzwerk-Seiten eines Client-Server-Netzwerks, insbesondere des Internets.

Als Client wird ein Computer oder eine Softwarekomponente bezeichnet, der bzw. die von einem anderen Computer oder einer anderen Softwarekomponente - dem sogenannten Server oder Web-Server - zur Verfügung gestellte Dienste in Anspruch nimmt. Derartige Dienste können beispielsweise das Speichern von Informationen oder das Verwalten von Peripheriegeräten (Drucker, Scanner etc.) sein. Der Client und der Server können zum Austausch von Informationen ein Kommunikationsnetzwerk benutzen, an das noch weitere Clients und/oder Server angeschlossen sein können. Ein derartiges Kommunikationsnetzwerk mit daran angeschlossenen Clients und Servern wird als Client-Server-Netzwerk bezeichnet.

Das Client-Server-Netzwerk ist beispielsweise als das Internet ausgebildet. Das Internet umfasst eine Vielzahl von Computer und Computer-Netzwerken, die über Kommunikationsverbindungen miteinander in Verbindung stehen. Die Computer tauschen untereinander Informationen aus, indem sie beispielsweise elektronische Post (electronic mail; e-mail) oder das World-Wide-Web (WWW) nutzen. Das WWW erlaubt es einem Server, Netzwerk-Seiten (sogenannte web pages) mit einem bestimmten Inhalt an einen Client zu senden. Der Client kann den Inhalt der Netzwerk-Seiten grafisch ausgeben und beispielsweise auf einem Ausgabegerät dem Benutzer des Client darstellen. Jeder Netzwerk-Seite des WWW ist eine eindeutig identifizierbare Netzwerk-Adresse (sogenannter Uniform Resource Locator; URL) zugeordnet.

Jeder URL ist eine numerische Internet Protocol (IP)-Adresse oder Netzwerk-Adresse zugeordnet. IP-Adressen können entweder statisch (Web-Server oder Anschluss von Rechnern per Standleitung), oder variabel (ISDN, DSL Zugang - hier bekommen Rechner bei jeder neuen Einwahl eine neue IP-Adresse zugewiesen) vergeben sein. Jede URL kann auch direkt über die ihr zugeordnete IP-Adresse von jedem Web-Browser aufgerufen werden, wenn auf dem Webserver entsprechende Rechte und Weiterleitungen gesetzt sind: Eingabe im Adressfeld eines Web-Browsers z.B.: http://62.144.160.2/ für http://www.hurra.de bzw. für http://www.hurra.com. IP-Adressen von Webservern (bspw. des hurra-Webservers) lassen sich auf der sog. DOS-Ebene (bei Windows XP -> Start -> Ausführen) von jedem Rechner mit einer Verbindung zum WWW durch die Eingabe von: ping www.hurra.de leicht herausfinden.

Als Domain oder Domain-Name wird der Name einer URL bezeichnet. Die Domain oder der Domain-Namen kann über einen sogenannten Domain-Registrar (Registrierungsbehörde) registriert werden. Je nach Endung einer URL ('.de', '.com', '.net' etc.) sind verschiedene Registrare zuständig - für '.de' ist es beispielsweise die DENIC. Man kann zwischen Toplevel-Domains (TLDs) (z.B. hurra.de, hurra.com) und Sublevel Domains (z.B. hurra.eu.com) oder kostenlosen Sublevel-Domains (z.B..de.ki oder .de.vu - werden oft von Suchmaschinen-Spammern genutzt) unterscheiden.

Um eine bestimmte Netzwerk-Seite betrachten zu können, generiert der Client eine Anfrage, welche die URL der gewünschten Netzwerk-Seite enthält. Die Anfrage wird an einen Web-Server geleitet, der diese Netzwerk-Seite bereitstellt. Wenn der Server die Anfrage empfängt, übersendet er die auf der Netzwerk-Seite enthaltenen Informationen an den Client. Dieser empfängt die Informationen und gibt sie typischerweise mittels des Browsers auf einem Ausgabegerät, beispielsweise einem Monitor, des Client aus.

Eine Möglichkeit Netzwerk-Seiten zu beschreiben, ist mittels der Seitenbeschreibungssprache HTML (Hypertext Markup Language) in einem sogenannten HTML-Dokument gegeben. Das HTML-Dokument kann URLs von anderen Netzwerk-Seiten (Verweise auf andere Netzwerk-Seiten, sogenannte Hyperlinks) enthalten, die auf dem gleichen Server oder auf anderen, ebenfalls an das Client-Server-Netzwerk angeschlossenen Servern zur Verfügung stehen. Wenn der Benutzer eine bestimmte Netzwerk-Seite betrachten möchte, gibt er die entsprechende URL in den Browser ein. Der Browser sendet die Anfrage an den diese Seite bereit stellenden Server, und dieser veranlasst, dass die angeforderte Netzwerk-Seite an den Client gesendet wird. Ist in einer aktuell angezeigten Netzwerk-Seite ein Hyperlink dargestellt, so kann der Benutzer durch Anwählen dieses Hyperlinks den Browser veranlassen, eine Anfrage an den diese Seite bereit stellenden Server zu senden, der dann wiederum veranlasst, dass die angeforderte Netzwerk-Seite an den Client gesendet wird.

Um aus der Fülle von Netzwerk-Seiten des WWW diejenigen auswählen zu können, welche gewünschte Informationen enthalten, ist es bekannt, Suchmaschinen (sogenannte Search Engines) zu verwenden. Suchmaschinen können von einem Client durch Eingabe einer dieser Suchmaschine zugeordneten URL aufgerufen werden (zum Beispiel: http://www.google.de; http://www.yahoo.de; http://www.altavista.de; etc.).

Die Suchmaschinen umfassen Komponenten, die regelässig und automatisch das WWW bzw. die Netzwerk-Seiten des WWW durchsuchen. Der Inhalt der Netzwerk-Seiten wird nach Schlüsselworten (sogenannten keywords) kategorisiert und zusammen mit den entsprechenden Netzwerk-Adressen in einer Adressen-Datenbank abgelegt (sog. Indizieren der Netzwerk-Seiten). Wenn ein Nutzer eine Suchmaschine aufruft und eine Anfrage zur Suche nach bestimmten Informationen in die Suchmaschine eingibt, durchsucht die Suchmaschine die Adressen-Datenbank bzw. die darin abgelegten Schlüsselworte nach den gewünschten Informationen und liefert dem Nutzer eine Liste mit Netzwerk-Adressen (sogenannten Treffern) derjenigen Netzwerk-Seiten, auf denen die gesuchten Informationen (mit einer gewissen Wahrscheinlichkeit) gefunden werden können. Die Liste mit den ermittelten Treffern wird auch als Suchergebnisliste bezeichnet. Die in der Liste enthaltenen Treffer werden von der Suchmaschine üblicherweise nach Relevanz sortiert.

Auf den Netzwerk-Seiten können unterschiedliche Informationen enthalten sein. Unter anderem ist es bekannt, auf den Netzwerk-Seiten Produkte oder Dienstleistungen zu bewerben. Trotz aller Bemühungen seitens der Suchmaschinen-Anbieter die Relevanz der Treffer in der Suchergebnisliste zu erhöhen, werden von der Suchmaschine häufig derart viele Treffer gelistet, dass es dem Benutzer schwer fällt, aus der Liste der Treffer die für ihn wirklich relevanten Informationen zu finden.

Dieses Problem wird noch dadurch verschärft, dass viele Anbieter im WWW auf einer Haupt-Netzwerk-Seite enthaltene Informationen oder Produkte auf einer Vielzahl weiterer statischer Netzwerk-Seiten anbieten, die unter verschiedenen Neben-URLs erreichbar sind. Solche Neben-Netzwerk-Seiten haben den gleichen oder zumindest einen sehr ähnlichen Inhalt wie die Haupt-Netzwerk-Seite und enthalten Verweise zu der Haupt-Netzwerk-Seite, die über die Haupt-URL in dem Client-Server-System erreichbar ist. Die Neben-URLs unterscheiden sich jedoch von den Haupt-URL insbesondere bezüglich der Netzwerk-Adresse und/oder der Top-Level-Domain. Die übrigen Netzwerk-Seiten mit dem gleichen oder ähnlichem Inhalt wie die Haupt-Netzwerk-Seite stellen also Abbilder der Haupt-Netzwerk-Seite dar, wobei sie sich in Kleinigkeiten, bspw. der Versionsnummer, dem Erstellungsdatum o.ä. von dem Inhalt der Haupt-Netzwerk-Seite unterscheiden können. Auf diese Weise soll die Relevanz der betreffenden Haupt-Netzwerk-Seite für Suchmaschinen erhöht werden, so dass die Netzwerk-Seite möglichst weit oben auf der Suchergebnisliste einer Suchmaschine aufgelistet wird. Außerdem soll sichergestellt werden, dass der Benutzer so oft wie möglich (notfalls über den Umweg über die Neben-Netzwerk-Seiten) auf der Haupt-Netzwerk-Seite landet.

Aus dem Stand der Technik (vergl. beispielsweise US 6,658,423 B1 und US 6,615,209 B1) sind Verfahren bekannt, um solche Netzwerk-Seiten mit gleichem oder ähnlichem Inhalt zu erkennen. In diesen Druckschriften wird des weiteren ausgeführt, dass Netzwerk-Seiten mit gleichem oder ähnlichem Inhalt eliminiert werden sollten, um in Suchmaschinen die Speicheranforderungen (zum Beispiel für die Adress-Datenbanken und für die Suchergebnislisten) und die erforderlichen Ressourcen für die Datenverarbeitung verringern zu können.

Es ist bekannt, den Inhalt von Netzwerk-Seiten dynamisch zu generieren. Zum Generieren einer dynamischen Netzwerk-Seite werden von dem Server zunächst aus einer oder mehreren Datenbanken Informationen beschafft, die dann in dem Server oder in dem Client zu dem Inhalt der gewünschten Netzwerk-Seite zusammengesetzt werden. Eine bekannte Möglichkeit zum Generieren einer dynamischen Netzwerk-Seite besteht darin, dass auf dem Server ein statischer Rahmen für eine Netzwerk-Seite abgelegt ist, der nur noch dynamisch mit verschiedenen Inhalten gefüllt werden muss. Diese Möglichkeit erlaubt jedoch nur eine eingeschränkte Dynamik bei der Generierung der Netzwerk-Seiten. Ein andere Möglichkeit besteht darin, dass der gesamte Inhalt der Netzwerk-Seite dynamisch generiert wird, bspw. indem automatisch zu einem anderen Server verzweigt wird und dort abgelegte Informationen als Inhalt der Netzwerk-Seite dynamisch angezeigt werden. Dies hat jedoch den Nachteil, dass auf diese Weise dynamisch generierte Netzwerk-Seiten von einer Suchmaschine in der Regel nicht berücksichtigt werden und deshalb in den Suchergebnislisten der Suchmaschinen nicht aufgeführt werden.

Eine Suchmaschine erkennt eine dynamische Netzwerk-Seite unter anderem daran, dass die URL der Netzwerk-Seite eine sog. Session-ID enthält, die bspw. in Form von "SID" oder "Session" in der URL erscheint. Außerdem ist es typisch für einen Server, der dynamische Netzwerk-Seiten generiert, dass auf ihm Programme zum Betreiben von Interaktionen ablaufen, die auf Parameter reagieren. Die Parameter werden über die URL der Netzwerk-Seite eingegeben und erlauben gewissermaßen eine Steuerung der dynamischen Seitengenerierung von außen. Parameter erscheinen in der URL in der Form: "...?Para1=Wert1&Para2=Wert2&...". Dem ersten Parameter Para1 ist ein "?" vorangestellt und zwischen dem Parameternamen Para1 und dem Wert Wert1 ist ein "=" vorgesehen. Allen weiteren Parametern ist ein "&" vorangestellt. Auch anhand dieser Parameter bzw. von "?" und /oder "&" in der URL kann eine Suchmaschine eine dynamische Netzwerk-Seite erkennen.

Typisch für Netzwerk-Seiten, die insgesamt dynamisch generiert werden ist bei der Ausgabe über einen Browser, dass in dem Browser nicht die URL der gewünschten Netzwerk-Seite, sondern die URL der Netzwerk-Seite des anderen Servers angezeigt wird, zu dem im Rahmen der dynamischen Generierung der Netzwerk-Seite verzweigt wurde und von dem die angezeigten Informationen geholt wurden. Das kann zu einer Irritation und Verärgerung eines Benutzers führen, insbesondere wenn die angewählte Netzwerk-Seite zu einem Online-Shop gehört.

Ausgehend von diesem Stand der Technik liegt der vorliegenden Erfindung die Aufgabe zugrunde, das automatische dynamische Generieren einer kompletten Netzwerk-Seite dahingehend zu verbessern, dass ein Client nicht erkennt, dass es sich um eine dynamische Netzwerk-Seite handelt.

Zur Lösung dieser Aufgabe wird ausgehend von dem Verfahren zum Erzeugen einer Netzwerk-Seite der eingangs genannten Art vorgeschlagen, dass
- von dem Server aus einer Datenbank, die über das Client-Server-Netzwerk zugänglich ist, Informationen angefordert werden, die zumindest einen Teil des Inhalts der Netzwerk-Seite darstellen; und
- die angeforderten Informationen über das Client-Server-Netzwerk an den Client übermittelt werden,
- wobei die angeforderten Informationen unter der Netzwerk-Adresse und/oder der Top-Level-Domain des Servers an den Client übermittelt werden.

Das Verfahren hat den Vorteil, dass es zum dynamischen Generieren von Netzwerk-Seiten eingesetzt werden kann, wobei der Client nicht erkennen kann, dass es sich bei der an ihn übermittelten Netzwerk-Seite bzw. bei den darin enthaltenen Informationen um einen dynamisch generierten Inhalt handelt. Der Client hat keine Möglichkeit in Erfahrung zu bringen, dass der ihm präsentierte Inhalt dynamisch generiert wurde. Selbst durch Eingabe des sog. Ping-Befehls auf der DOS-Ebene erhält ein Benutzer des Client die IP-Adresse des Servers und nicht die des Servers, von dem die übermittelten Informationen eigentlich geholt wurden. Ebenso umfasst die URL keine Session-Ids und keine Parameter bzw. "?" oder "&", obwohl die auf die erfindungsgemäße Weise dynamisch generierten Netzwerk-Seiten nach wie vor die volle Funktionalität von auf herkömmliche Weise dynamisch generierten Netzwerk-Seiten aufweisen.

Gemäß einer bevorzugten Ausführungsform ist der Client ein Computer, der mit dem Client-Server-Netzwerk in Verbindung steht und über den die übermittelten Informationen mittels eines Browsers auf einem Ausgabegerät des Client ausgegeben werden können. Der Benutzer des Client erkennt auf der ihm über den Browser dargestellten Netzwerk-Seite nicht, dass der Inhalt dieser Seite dynamisch generiert wurde. Insbesondere wird in der Adresszeile des Browsers nicht die URL der Datenbank bzw. eines weiteren Servers, an den die Datenbank angeschlossen ist, angezeigt, sondern die URL des Servers, an den der Client seine Anfrage nach den Informationen gerichtet hat.

Alternativ wird vorgeschlagen, dass der Client eine als Computerprogramm ausgebildete Suchmaschine ist, die auf einem Server abläuft, der mit dem Client-Server-Netzwerk in Verbindung steht, wobei die Suchmaschine die übermittelten Informationen nach Schlüsselworten kategorisiert und zusammen mit den entsprechenden Netzwerk-Adressen in einer Datenbank abgelegt. Der Client hat den Eindruck, dass der dynamisch generierte Inhalt der angeforderten Netzwerk-Seite von dem gleichen Server stammt (d.h. die gleiche IP-Adresse und/oder die gleiche Top-Level-Domain hat) und er erkennt nicht dass die dargestellten Informationen tatsächlich von einer externen, außerhalb des Servers angeordneten Datenbank stammen.

Gemäß einer vorteilhaften Weiterbildung der Erfindung wird vorgeschlagen, dass
- die angeforderten Informationen über das Client-Server-Netzwerk an den Server übermittelt werden; und
- in dem Server anhand der empfangenen Informationen der Inhalt der Netzwerk-Seite dynamisch generiert wird.

Gemäß einer bevorzugten Ausführungsform wird in dem Server das äußere Erscheinungsbild der dynamisch generierten Netzwerk-Seite derart ausgebildet, dass die Netzwerk-Seite zumindest aus Sicht des Client als eine statische Netzwerk-Seite erscheint. Auf diese Weise dynamisch generierte Netzwerk-Seiten werden von Suchmaschinen berücksichtigt, da sie den Suchmaschinen als statische Seiten erscheinen. Mit dem erfindungsgemäßen Verfahren wird also sozusagen der Inhalt der Netzwerk-Seite aus der Datenbank unter der Domain des Servers für die Suchmaschinen getarnt. Das Verfahren kann zum Erzeugen von Suchmaschinen-optimierten Netzwerk-Seiten eingesetzt werden. Wenn ein Benutzer der Suchmaschine auf der Suche nach einem bestimmten Suchbegriff dann auf eine erfindungsgemäß dynamisch generierte Netzwerk-Seite gelangt, kann er über einen Querverweis (Link oder Hyperlink) zu dem eigentlichen Online-Shop gelangen, ohne dass dem Benutzer dies auffällt. Sowohl die nach dem erfindungsgemäßen Verfahren dynamisch generierte Netzwerk-Seite als auch die Netzwerk-Seite des Online-Shops sind zumindest hinsichtlich der IP-Adresse und/oder der TLD unter der gleichen URL erreichbar.

Das äußere Erscheinungsbild der dynamisch generierten Netzwerk-Seite ist derart ausgebildet, dass sowohl für die Suchmaschine als auch für einen Benutzer von außerhalb nicht erkennbar ist, dass die auf der Netzwerk-Seite angezeigten Inhalte nicht auf dem Server selbst gehostet werden, sondern von einer externen Datenbank stammen, die über eine andere URL als die Netzwerkseite erreichbar ist. Wenn die Netzwerk-Seite mit den externen Inhalten bspw. mittels eines Browsers auf einem Monitor ausgegeben wird, erscheint im Browser als URL nicht die Toplevel-Domain der externen Datenbank, sondern die der Netzwerk-Seite. Auch bei Anzeige der Eigenschaften des Inhalts der Netzwerk-Seite (Click mit der rechten Maustaste auf den Inhalt und Auswahl von "Eigenschaften" in dem erscheinenden Pull-Down-Menu) wird als Quelle des Inhalts nicht die Toplevel-Domain der externen Datenbank, sondern die der Netzwerk-Seite angezeigt. Auch mittels geeigneter Hilfsmittel bspw. über den Ping-Befehl in der MS-Eingabeaufforderung wird als Quelle des Inhalts nicht die Toplevel-Domain der externen Datenbank ausgegeben. Das gleiche gilt auch für entsprechende Hilfsmittel, die über das Internet erreichbar sind, wie bspw. unter www.netcraft.com. Auch dort wird als Quelle des Inhalts nicht die Toplevel-Domain der externen Datenbank ausgegeben. Es gibt also für eine Suchmaschine oder einen Benutzer keinerlei Möglichkeit zu erkennen, dass die auf der Netzwerk-Seite dargestellten Inhalte tatsächlich dynamisch generiert wurden und nicht auf dem Server gehostet werden.

Vorteilhafterweise sind die Informationen, die zumindest einen Teil des Inhalts der Netzwerk-Seite darstellen, in einer von einem weiteren Server des Client-Server-Netzwerks verwalteten Datenbank abgelegt und sendet der Server zur Anforderung der Informationen über das Client-Server-Netzwerk eine Anfrage mit einer Netzwerk-Adresse (URL) des weiteren Servers an diesen.

Gemäß einer anderen vorteilhaften Weiterbildung der Erfindung wird vorgeschlagen, dass die Anfrage des Client nach Informationen der Netzwerk-Seite neben der URL der Netzwerk-Seite auch eine eindeutige Kennung umfasst, welche den Server veranlasst, die Informationen aus der Datenbank anzufordern. Die von dem Server ausgeführten Verfahrensschritte zum erfindungsgemäßen dynamischen Generieren der Netzwerk-Seite werden also durch die Kennung ausgelöst, die Bestandteil der Anfrage des Client an den Server ist. Die Anfrage kann von einem Benutzer des Client entweder direkt oder indirekt über einen Hyperlink abgesandt werden. Es ist aber auch denkbar, dass die Anfrage von einer Suchmaschine kommt, die während des sog. Crawlingvorgangs ausgehend von einer ersten Netzwerk-Seite allen auf dieser Seite enthaltenen Querverweise nachgeht, nach und nach die den Querverweisen entsprechenden Netzwerk-Seiten aufruft bzw. eine entsprechende Anfrage sendet und auf diese Weise möglichst alle erreichbaren Netzwerk-Seiten spidert. Die Suchmaschine merkt dabei nicht, dass die Netzwerk-Seiten, von denen Sie die Informationen anfordert, tatsächlich dynamisch generiert wurden und die ihr übermittelten Informationen auch noch von einer externen Datenbank, d.h. nicht von dem Server, sondern von einem weiteren, über eine andere URL erreichbaren Server, stammen.

Die dynamisch generierten Netzwerkseiten werden also statisch dargestellt. In Zukunft wäre es aber auch möglich, dass die Crawler auch dynamische Netzwerkseiten spidern können und die Netzwerkseiten optisch unter der TLD und/oder IP-Adresse des Kunden dargestellt werden, aber die Seiten eigentlich weiterhin über den Hurra-Webserver ausgeliefert werden.

Zur konkreten Realisierung der Erfindung veranlasst die in der Anfrage des Client nach Informationen der Netzwerk-Seite enthaltene und von dem Server empfangene eindeutige Kennung den Server, ein auf dem Server abgespeichertes Script abzuarbeiten, wobei die Abarbeitung des Scripts auf dem Server diesen veranlasst, die Informationen aus der Datenbank anzufordern. Das Script erkennt also die eindeutige Kennung und sendet eine Anfrage an den weiteren Server, über den die Datenbank mit dem gewünschten Inhalt erreichbar ist. Die Inhalte werden von dem weiteren Server an den Server übertragen und in dem Server in die Netzwerk-Seite eingebunden bzw. zu der Netzwerk-Seite zusammengefügt. Die fertige Netzwerk-Seite kann dann an den Client zur Ausgabe an den Benutzer oder bei einer Suchmaschine zur Indizierung übermittelt werden.

Ein weiterer Aspekt der vorliegenden Erfindung ist darin zu sehen, dass mit dem erfindungsgemäßen Verfahren eine Vielzahl inhaltsgleicher Netzwerk-Seiten dynamisch generiert werden kann, die für eine Suchmaschine alle ein statisches Erscheinungsbild haben und deshalb auch in einer Trefferliste aufgeführt werden. Falls die Suchmaschine bei mehreren inhaltsgleichen Netzwerk-Seiten eine der Seiten auswählt und nur diese eine Seite in der Trefferliste darstellt, führt die Erfindung auf jeden Fall dazu, dass die Netzwerk-Seite relativ weit oben auf der Trefferliste erscheint, weil alle in der Seite enthaltenen Verweise (Hyperlinks) auf URLs der gleichen Toplevel-Domain gerichtet sind. Bei einer Vielzahl von Verweisen geht die Suchmaschine deshalb davon aus, dass der Netzwerk-Seite eine hohe Relevanz zukommt.

Als noch eine Lösung der Aufgabe der vorliegenden Erfindung wird ausgehend von dem Server der eingangs genannten Art vorgeschlagen, dass der Server
- Mittel zur Anforderung von Informationen der Netzwerk-Seite aus einer Datenbank, die über das Client-Server-Netzwerk zugänglich ist, aufweist, wobei die Informationen zumindest einen Teil des Inhalts der Netzwerk-Seite darstellen;
- Mittel zum Empfangen der angeforderten Informationen über das Client-Server-Netzwerk aufweist;
- Mittel zum dynamischen Generieren des Inhalts der Netzwerk-Seite anhand der empfangenen Informationen aufweist; und
- Mittel zur Übermittlung des dynamisch generierten Inhalts der Netzwerk-Seite an den Client aufweist,
- wobei die Generierungsmittel den Inhalt der Netzwerk-Seite derart generieren und die Übermittlungsmittel den Inhalt der Netzwerk-Seite derart an den Client übermitteln, dass der Inhalt der Netzwerk-Seite unter der Netzwerk-Adresse und/oder der Top-Level-Domain des Servers an den Client übermittelt wird.

Gemäß einer vorteilhaften Weiterbildung der vorliegenden Erfindung wird vorgeschlagen, dass der Server Mittel zur Ausführung des erfindungsgemäßen Verfahrens aufweist. Die Mittel zur Ausführung des Verfahrens sind vorzugsweise als ein Script ausgebildet, das auf dem Server abgespeichert ist.

Ein bevorzugtes Ausführungsbeispiel der vorliegenden Erfindung wird anliegend anhand der Figuren näher erläutert. Es zeigen:
- Figur 1: eine Client-Server-Umgebung gemäß einer ersten Ausführungsform;
- Figur 2: ein Ablaufdiagramm eines Verfahrens zur automatischen computerunterstützten Auswahl einer Netzwerk-Seite eines Client-Server-Netzwerks aus einer Mehrzahl von Netzwerk-Seiten mit dem gleichen oder ähnlichem Inhalt;
- Figur 3: ein Ablaufdiagramm eines weiteren Verfahrens zur Suche nach einer Netzwerk-Seite eines Client-Server-Netzwerks mit einem bestimmten Inhalt;
- Figur 4: ein weiteres Ablaufdiagramm eines Verfahrens zum Durchsuchen eines Client-Server-Netzwerks nach Netzwerk-Seiten mit einem bestimmten Inhalt;
- Figur 5: ein weiteres Ablaufdiagramm eines Verfahrens zum Suchen nach einer Netzwerk-Seite mit einem bestimmten Inhalt in einem Client-Server-Netzwerk;
- Figur 6: eine weitere Client-Server-Umgebung zur Ausführung der Verfahren nach einer der Figuren 2 bis 5;
- Figur 7: ein Ablaufdiagramm eines erfindungsgemäßen Verfahrens zum Erzeugen einer Netzwerk-Seite gemäß einer bevorzugten Ausführungsform; und
- Figur 8: eine Client-Server-Umgebung zur Realisierung des erfindungsgemäßen Verfahrens.

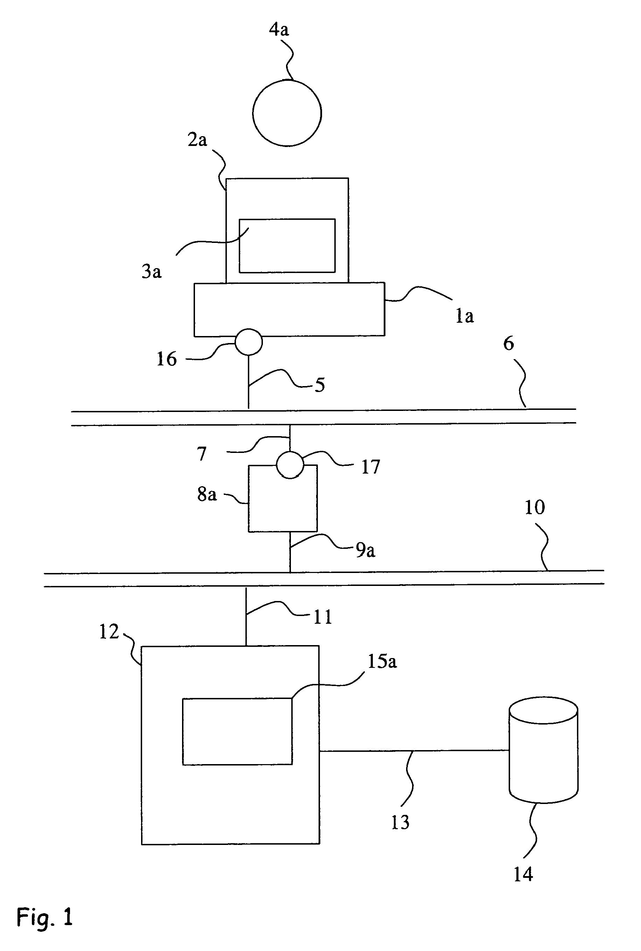

In Figur 1 ist eine Client-Server-Umgebung dargestellt, die einen Client 1a aufweist. Der Client 1a ist beispielsweise als ein Personalcomputer (PC) oder ein Laptop ausgebildet. Dem Client 1a ist ein Monitor 2a zugeordnet, auf dem mittels eines auf dem Client 1a ablaufenden Browsers 3a eine Netzwerk-Seite dargestellt werden kann. Die Netzwerk-Seite ist beispielsweise ein HTML-Dokument, das mittels des auf dem Client 1a ablaufenden Browsers 3a interpretiert und anschließend auf dem Monitor 2a einem Benutzer 4a zur Ansicht gebracht wird.

Der Client 1a ist mittels einer Datenleitung 5 mit einem Telekommunikationsnetzwerk 6 verbunden. Mit einer Datenleitung 7 ist ein Diensteanbieter, der einen Zugang zu einem Client-Server-Netzwerk 10 zur Verfügung stellt, ein sogenannter Provider 8a, mit dem Telekommunikationsnetzwerk 6 verbunden. Der Provider 8a ist über eine weitere Datenleitung 9a mit dem Client-Server-Netzwerk 10 verbunden, das beispielsweise das Internet ist. Über eine Datenleitung 11 ist auch ein Server 12 mit dem Client-Server-Netzwerk 10 verbunden. Über eine Datenleitung 13 ist der Server 12 mit einer Datenbank 14 verbunden. Auf dem Server 12 läuft eine als Computerprogramm realisierte Suchmaschine 15a ab.

Dem Client 1a ist (beispielsweise von einem Betreiber des Telekommunikationsnetzwerks 6, einem sogenannten Telekommunikationsunternehmen) eine Anschlusskennung 16 zugeordnet. Die Anschlusskennung 16 kann beispielsweise einer Telefonnummer des Benutzers 4a entsprechen. Ferner ist dem Provider 8a, bzw. dem Computersystem des Providers 8a, eine Einwahlnummer 17 eindeutig zugeordnet, mittels der von dem Client 1a aus eine Telekommunikationsverbindung zu dem Provider 8a hergestellt werden kann.

Mit Hilfe der Suchmaschine 15a können die in dem Client-Server-Netzwerk 10 vorhandenen Netzwerk-Seiten auf einen bestimmten Inhalt hin durchsucht werden, so dass der Benutzer 4a möglichst effektiv Netzwerk-Seiten finden kann, auf denen Informationen enthalten sind, die einem gewünschten Inhalt entsprechen. Die Suchmaschine 15a ist in drei Hauptfunktionen unterteilt:
(i) Durchsuchen des Client-Server-Netzwerks 10 (sogenanntes crawling);
(ii) den durchsuchten Netzwerk-Seiten Zuordnen von Schlüsselworten in Abhängigkeit von dem Inhalt der durchsuchten Netzwerk-Seiten (sogenanntes Indexieren oder indexing) und Abspeichern von Informationen betreffend die durchsuchten Netzwerk-Seiten, insbesondere die den Netzwerk-Seiten zugeordneten Schlüsselworte und die Netzwerk-Adressen (Uniform Resource Locators; URLs) unter denen die Netzwerk-Seiten in dem Client-Server-Netzwerk 10 erreichbar sind; und
(iii) Beantworten von Suchanfragen, wobei unter Verwendung der Schlüsselworte Suchergebnislisten mit Treffern erstellt werden.

Als Treffer werden in der Suchergebnisliste beispielsweise die Titel, die Netzwerk-Adressen oder kurze Inhaltsübersichten der gefundenen Netzwerk-Seiten angegeben, zusammen mit Querverweisen (sogenannten Hyperlinks) zu den betreffenden Netzwerk-Seiten. In der Suchergebnisliste sind die Treffer in der Regel entsprechend ihrer Relevanz sortiert, das heißt, es wird versucht, dem Benutzer 4a die im Rahmen der Suchanfrage gefundenen Netzwerk-Seiten so zu präsentieren, dass die relevanteren Netzwerk-Seiten am Anfang der Suchergebnisliste und die weniger relevanten am Ende der Suchergebnisliste angeführt sind.

Die Relevanz einer Netzwerk-Seite wird unter anderem umso größer eingestuft, desto mehr Querverweise zu der Netzwerk-Seite hinführen. Es ist bekannt, die Relevanz einer Netzwerk-Seite in einer Suchergebnisliste dadurch zu erhöhen, dass eine Vielzahl von statischen Neben-Netzwerk-Seiten generiert werden, deren Inhalt im wesentlichen ein Abbild der ursprünglichen Haupt-Netzwerk-Seite ist. Das hat jedoch für den Benutzer 4a den Nachteil, dass in der Suchergebnisliste unter Umständen eine Vielzahl von Treffern aufgeführt ist, die alle letzten Endes auf die gleiche Haupt-Netzwerk-Seite verweisen. Abgesehen davon, dass es für den Benutzer 4a äußerst ärgerlich ist, über verschiedene Treffer der Suchergebnisliste auf der gleichen Netzwerk-Seite zu enden, bedeuten die mehrfachen, inhaltsgleichen oder inhaltsähnlichen Netzwerk-Seiten einen erheblichen zusätzlichen Speicherplatzbedarf in dem Client-Server-Netzwerk 10 und in der Datenbank 14. Zudem werden erhebliche Zusatzressourcen benötigt, um diese redundanten Datenmengen der inhaltsgleichen oder inhaltsähnlichen Netzwerk-Seiten über das Client-Server-Netzwerk 10 zu transportieren und in den Servern 12 und Clients 1a zu verarbeiten.

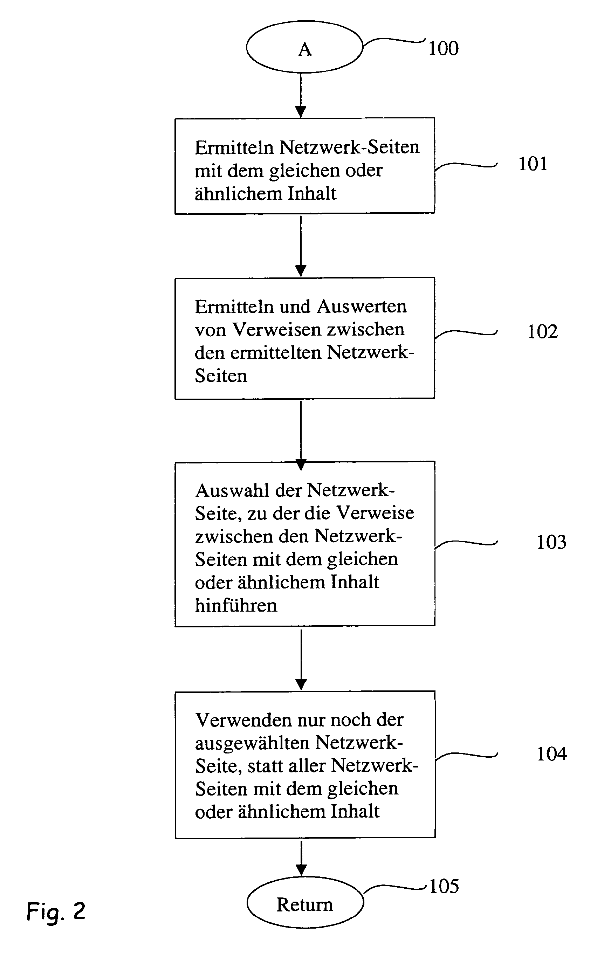

Aus diesem Grund werden verschiedene Verfahren beschrieben, die nachfolgend anhand der in den Figuren 2 bis 5 dargestellten Ablaufdiagramme verdeutlicht werden.

Das in Figur 2 dargestellte Verfahren dient dazu, aus mehreren Netzwerk-Seiten des Client-Server-Netzwerks 10 mit dem gleichen oder ähnlichem Inhalt eine bestimmte Netzwerk-Seite auszuwählen. Das dargestellte Ablaufdiagramm ist in der Art eines Unterprogramms (sogenannte Subroutine) beschrieben, das aus anderen Programmen heraus zur Auswahl einer bestimmten Netzwerk-Seite aus einer Mehrzahl von inhaltsgleichen oder inhaltsähnlichen Netzwerk-Seiten aufgerufen werden kann.

Das dargestellte Auswahlverfahren A beginnt in einem Funktionsblock 100. In einem Funktionsblock 101 werden aus einer Vielzahl von Netzwerk-Seiten diejenigen Netzwerk-Seiten ermittelt, die den gleichen oder ähnlichen Inhalt haben. Von einem ähnlichen Inhalt zweier Netzwerk-Seiten wird in diesem Zusammenhang gesprochen, wenn der wesentliche Inhalt der beiden Netzwerk-Seiten übereinstimmt, jedoch geringfügige Abweichungen im Inhalt beispielsweise hinsichtlich des Erstellungsdatums der Netzwerk-Seiten oder hinsichtlich der Versionsnummer der Netzwerk-Seite bestehen. Die URL der Netzwerk-Seiten spielt bei der Prüfung auf Identität keine Rolle. Aus dem Stand der Technik sind verschiedene Verfahren zum Ermitteln von Netzwerk-Seiten mit dem gleichen oder ähnlichem Inhalt bekannt. Ein solches Verfahren ist beispielsweise aus der US 6,658,423 B1 bekannt, auf die ausdrücklich Bezug genommen wird.

In einem Funktionsblock 102 werden die ermittelten Netzwerk-Seiten mit dem gleichen oder ähnlichem Inhalt näher untersucht. Zu diesem Zweck werden die Verweise zwischen den Netzwerk-Seiten mit dem gleichen oder ähnlichem Inhalt ermittelt und ausgewertet. Zu diesem Zweck werden zunächst sämtliche inhaltsgleichen bzw. inhaltsähnlichen Netzwerk-Seiten ermittelt. Die Verweise werden dann anhand geeigneter Algorithmen dahingehend ausgewertet, dass aus den inhaltsgleichen bzw. inhaltsähnlichen Netzwerk-Seiten diejenige Netzwerk-Seite ermittelt wird, zu der die Verweise der übrigen inhaltsgleichen oder inhaltsähnlichen Netzwerk-Seiten hinführen. In einem Funktionsblock 103 wird diejenige Netzwerk-Seite ausgewählt, zu der die verweise zwischen den inhaltsgleichen oder inhaltsähnlichen Netzwerk-Seiten hinführen.

In einem Funktionsblock 104 wird dafür gesorgt, dass für die weitere Verarbeitung in dem aufrufenden Programm nicht mehr alle inhaltsgleichen bzw. inhaltsähnlichen Netzwerk-Seiten, sondern nur noch die in dem Funktionsblock 103 ausgewählte Netzwerk-Seite herangezogen wird. In einem Funktionsblock 105 ist das Unterprogramm beendet und es wird wieder in das aufrufende Hauptprogramm verzweigt.

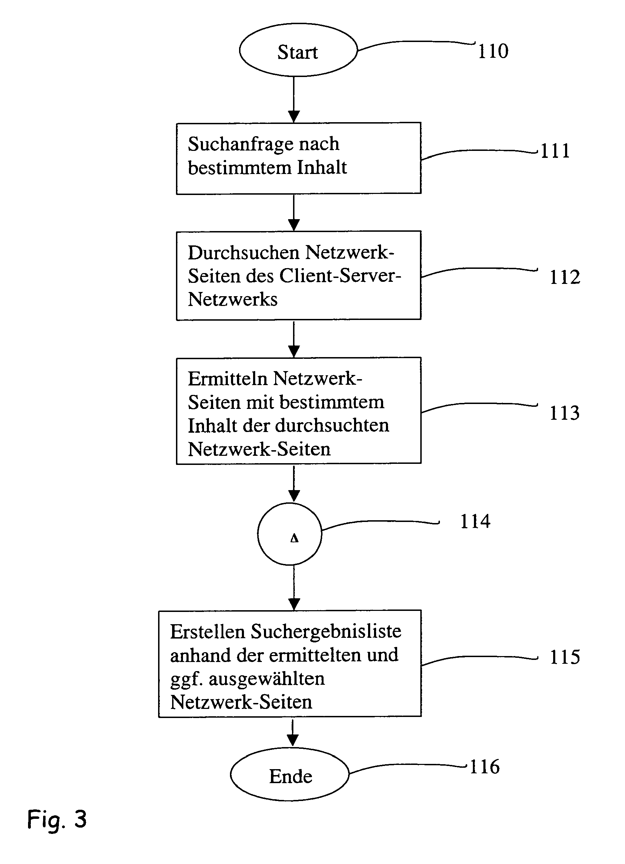

In Figur 3 ist ein Ablaufdiagramm eines Verfahrens dargestellt, aus dem heraus das in Figur 2 dargestellte Verfahren aufgerufen und ausgeführt werden kann. Das in Figur 3 dargestellte Ablaufdiagramm entspricht also einem Hauptprogramm, welches in das in Figur 2 dargestellte Unterprogramm verzweigt, dieses ausführt und dann wieder in das Hauptprogramm zurückkehrt. Das in Figur 3 dargestellte Verfahren wird vorzugsweise auf dem Server 12 des Client-Server-Netzwerks 10 ausgeführt. Bei dem in Figur 3 dargestellten Verfahren handelt es sich um eine Suchmaschine 15a gemäß eines ersten bevorzugten Ausführungsbeispiels.

Das Verfahren beginnt in einem Funktionsblock 110. In einem Funktionsblock 111 empfängt der Server 12 bzw. die Suchmaschine 15a eine Suchanfrage von dem Client 1a nach Netzwerk-Seiten des Client-Server-Netzwerks 10 mit einem bestimmten Inhalt. In einem Funktionsblock 112 wird mit dem Durchsuchen des Client-Server-Netzwerks 10 begonnen. Dabei werden eine Vielzahl von Netzwerk-Seiten, idealerweise alle Netzwerk-Seiten, des Client-Server-Netzwerks 10 durchsucht. Aus den durchsuchten Netzwerk-Seiten werden in einem Funktionsblock 113 diejenigen Netzwerk-Seiten ermittelt, auf denen Informationen mit dem gesuchten Inhalt enthalten sind.

In einem Funktionsblock 114 wird das in Figur 2 dargestellte Auswahlverfahren A aufgerufen und ausgeführt. Dabei werden diejenigen Netzwerk-Seiten des Client-Server-Netzwerks 10 verarbeitet, die Informationen umfassend den gesuchten Inhalt aufweisen. Aus diesen Netzwerk-Seiten werden, wie oben bereits erläutert, inhaltsgleiche bzw. inhaltsähnliche Netzwerk-Seiten ermittelt, die Querverweise in diesen inhaltsgleichen oder inhaltsähnlichen Netzwerk-Seiten ermittelt und ausgewertet und diejenige Netzwerk-Seite ausgewählt, zu der die Verweise zwischen den inhaltsgleichen oder inhaltsähnlichen Netzwerk-Seiten hinführen.

Im weiteren in Figur 3 dargestellten Verfahren wird statt der inhaltsgleichen bzw. inhaltsähnlichen Netzwerk-Seiten nur noch die ausgewählte Netzwerk-Seite verwendet. Das bedeutet, dass nach einer Rückkehr aus dem Unterprogramm zurück in das Hauptprogramm in einem Funktionsblock 115 zum Erstellen der Suchergebnisliste nicht mehr alle inhaltsgleichen oder inhaltsähnlichen Netzwerk-Seiten, sondern nur noch die ausgewählte Haupt-Netzwerk-Seite herangezogen wird. In einem Funktionsblock 116 ist das Verfahren beendet.

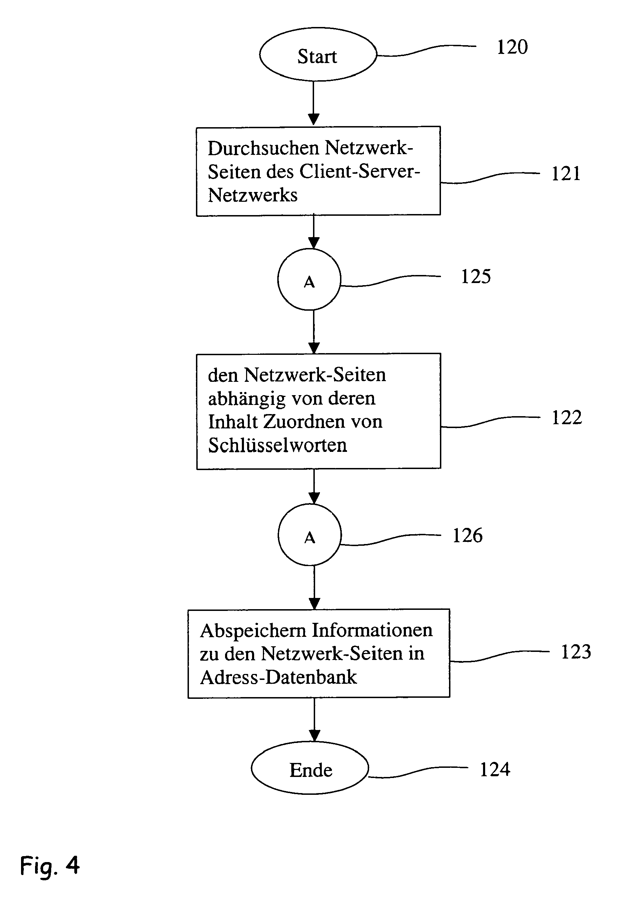

Bei dem in Figur 3 dargestellten Verfahren werden die Netzwerk-Seiten des Client-Server-Netzwerks 10 erst nach Empfang einer Suchanfrage (Funktionsblock 111) durchsucht. In der Regel ist es allerdings so, dass dieses Durchsuchen der Netzwerk-Seiten (sogenanntes web-crawling) in regelmäßigen Abständen unabhängig von der eigentlichen Suchanfrage von der Suchmaschine 15a automatisch durchgeführt wird. Ein Ablaufdiagramm eines entsprechenden Verfahrens ist in Figur 4 dargestellt.

Das Verfahren beginnt in einem Funktionsblock 120. In einem Funktionsblock 121 werden die Netzwerk-Seiten des Client-Server-Netzwerks 10 durchsucht (sogenanntes crawling). In einem Funktionsblock 122 werden den durchsuchten Netzwerk-Seiten abhängig von deren Inhalt bestimmte Schlüsselworte zugeordnet (sogenanntes indexing). Damit im Rahmen der eigentlichen Suchanfrage dann auf die bereits durchsuchten und verarbeiteten Netzwerk-Seiten zugegriffen werden kann, werden zu den durchsuchten Netzwerk-Seiten in einem Funktionsblock 123 Informationen in einer Adress-Datenbank abgespeichert. Die Adress-Datenbank ist beispielsweise die Datenbank 14. Als Informationen zu den Netzwerk-Seiten werden vorzugsweise die den Netzwerk-Seiten jeweils zugeordneten Schlüsselworte zusammen mit den Netzwerk-Adressen (URLs) der Netzwerk-Seiten abgespeichert. In einem Funktionsblock 124 ist das Verfahren gemäß Figur 4 beendet.

Um bei dem in Figur 4 dargestellten Verfahren die über das Client-Server-Netzwerk 10 zu übertragende Datenmenge und die in dem Client 1a und dem Server 12 zu verarbeitende Datenmenge, sowie die in der Adress-Datenbank 14 zu speichernde Datenmenge möglichst gering zu halten, und um auf diese Weise eine Beschleunigung der Datenverarbeitung in der gesamten Client-Server-Umgebung zu ermöglichen, kann das in Figur 2 dargestellte Auswahlverfahren A im Anschluss an den Funktionsblock 121 und/oder im Anschluss an den Funktionsblock 122 ausgeführt werden. Ein Ausführen des Auswahlverfahrens A (Funktionsblock 125) im Anschluss an den Funktionsblock 121 hat zur Folge, dass nicht allen inhaltsgleichen bzw. inhaltsähnlichen Netzwerk-Seiten abhängig von deren Inhalt Schlüsselworte zugeordnet werden, sondern es werden lediglich der ausgewählten Netzwerk-Seite abhängig von ihrem Inhalt geeignete Schlüsselworte zugeordnet. Die übrigen inhaltsgleichen oder inhaltsähnlichen Netzwerkseiten bleiben unberücksichtigt. Dadurch können auch die in dem Funktionsblock 123 in der Adress-Datenbank 14 abzuspeichernden Informationen zu den Netzwerk-Seiten verringert werden.

Alternativ kann das Auswahlverfahren A (Funktionsblock 126) auch im Anschluss an den Funktionsblock 122 ausgeführt werden, wobei dies dazu führt, dass selbst wenn sämtlichen inhaltsgleichen bzw. inhaltsähnlichen Netzwerk-Seiten in Abhängigkeit von deren Inhalt in dem Funktionsblock 122 Schlüsselworte zugeordnet wurden, nach dem Ausführen des Auswahlverfahrens A in dem Funktionsblock 123 Informationen nur zu der ausgewählten Netzwerk-Seite in der Adress-Datenbank 14 abgespeichert werden.

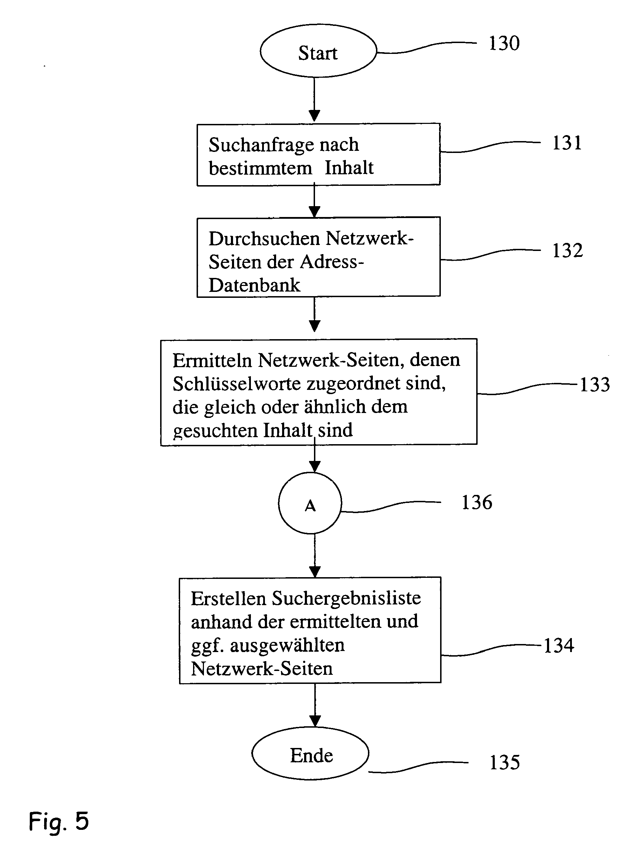

In Figur 5 ist ein Ablaufdiagramm eines weiteren Verfahrens dargestellt, das die Bearbeitung der eigentlichen Suchanfrage völlig unabhängig von dem in Figur 4 dargestellten Durchsuchen der Netzwerk-Seiten des Client-Server-Netzwerks 10 darstellt. Das Verfahren aus Figur 5 beginnt in einem Funktionsblock 130. In einem Funktionsblock 131 empfängt der Server 12 bzw. die Suchmaschine 15a eine Suchanfrage von dem Client 1a bzw. von dem Benutzer 4a. In einem Funktionsblock 132 müssen nun nicht die Netzwerk-Seiten des gesamten Client-Server-Netzwerks 10 durchsucht werden, um die Netzwerk-Seiten zu finden, die Informationen enthalten, die dem gesuchten Inhalt entsprechen. Stattdessen werden lediglich die in der Adress-Datenbank 14 abgelegten Netzwerk-Seiten, bzw. die darin abgelegten Informationen zu den Netzwerk-Seiten durchsucht. In einem Funktionsblock 133 werden diejenigen Netzwerk-Seiten ermittelt, denen Schlüsselworte zugeordnet sind, die gleich oder ähnlich dem gesuchten Inhalt sind. Anschließend wird in einem Funktionsblock 134 die Suchergebnisliste erstellt. In einem Funktionsblock 135 ist das in Figur 5 dargestellte Verfahren zum Abarbeiten einer Suchanfrage beendet.

Um unabhängig von den in der Adress-Datenbank 14 im Rahmen des Verfahrens gemäß Figur 4 abgelegten Informationen zu den Netzwerk-Seiten die Relevanz der Treffer in der Suchergebnisliste zu erhöhen, wird im Anschluss an den Funktionsblock 133 zu dem Auswahlverfahren A (Funktionsblock 136) gemäß Figur 2 verzweigt. Im Rahmen des Auswahlverfahrens A werden aus den in dem Funktionsblock 133 ermittelten Netzwerk-Seiten inhaltsgleiche und inhaltsähnliche Netzwerk-Seiten ermittelt und aus diesen wiederum eine Netzwerk-Seite ausgewählt, zu der die Verweise zwischen den inhaltsgleichen und inhaltsähnlichen Netzwerk-Seiten hinführen (sogenannte Haupt-Netzwerk-Seite). Wenn dann im Anschluss an den Funktionsblock 136 der Funktionsblock 134 ausgeführt wird, wird die Suchergebnisliste nicht unter Berücksichtigung einer Mehrzahl von inhaltsgleichen oder inhaltsähnlichen Netzwerk-Seiten, sondern lediglich auf Grundlage der ausgewählten Netzwerk-Seite erstellt. Das bedeutet, dass die in der Suchergebnisliste angeführten Treffer tatsächlich auf unterschiedliche Netzwerk-Seiten verweisen.

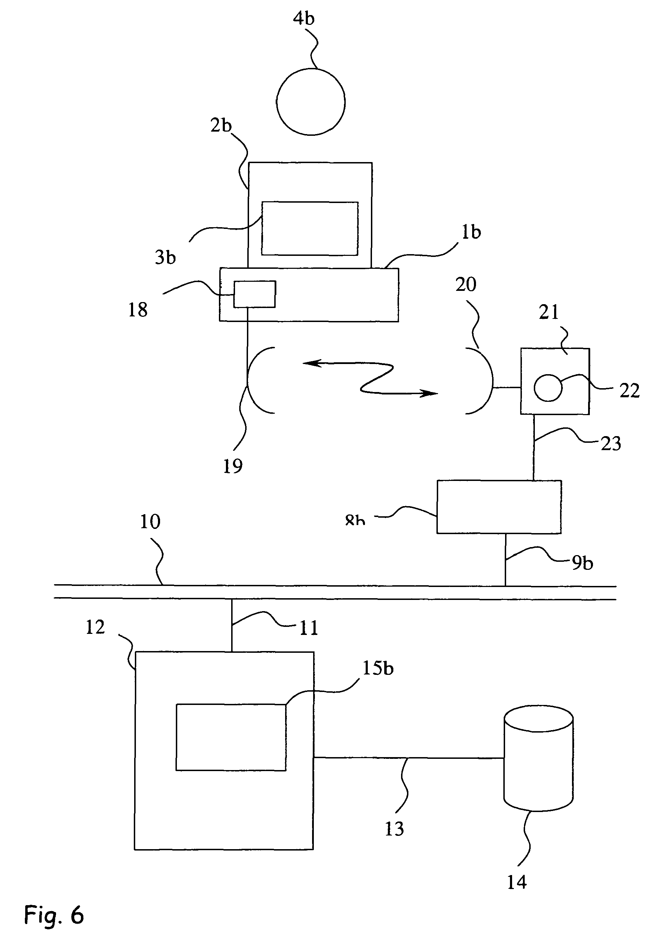

In Figur 6 ist eine zweite Ausführungsform einer Client-Server-Umgebung dargestellt, die einen Client 1b aufweist. Der Client 1b ist als ein Laptop ausgebildet. Dem Client 1b ist ein Monitor 2b zugeordnet, auf dem mittels eines auf dem Client 1b ablaufenden Browsers 3b eine Netzwerk-Seite beziehungsweise deren Inhalt dargestellt werden kann. Die Netzwerk-Seite ist beispielsweise ein HTML-Dokument, das mittels des auf dem Client 1b ablaufenden Browsers 3b interpretiert und anschließend auf dem Monitor 2b einem Benutzer 4b zur Ansicht gebracht wird.

Der Client 1b weist in der in Figur 6 dargestellten Ausführungsform eine Telekommunikationseinheit 18 auf. Der Telekommunikationseinheit 18 ist eine Sende- und Empfangsantenne 19 zugeordnet. Eine weitere Sende- und Empfangsantenne 20 ist einer Basisstation 21 zugeordnet. Der Basisstation 21 ist ferner eine eindeutige Kennung 22 zugeordnet, die beispielsweise als eine alphanumerische Zahlenfolge ausgebildet ist.

Die Basisstation 21 ist mittels einer Datenleitung 23 mit einem Provider 8b verbunden. Der Provider 8b ist über eine Datenleitung 9b mit dem in Figur 1 beschriebenen Client-Server-Netzwerk 10 verbunden. Über die Datenleitung 11 ist ferner der in Figur 1 beschriebene Server 12 mit dem Client-Server-Netzwerk 10 verbunden. Der Server 12 ist über die Datenleitung 13 mit der Datenbank 14 verbunden. Auf dem Server 12 läuft ferner eine als Computerprogramm realisierte Suchmaschine 15b ab.

Mittels der mobilen Telekommunikationseinheit 18 und dem als Laptop ausgebildeten Client 1b wird eine Verbindung zu dem Client-Server-Netzwerk 10, das beispielsweise als das Internet ausgebildet ist, hergestellt. Dabei kann die mobile Telekommunikationseinheit 18 beispielsweise als Mobiltelefon ausgebildet sein. Die mobile Telekommunikationseinheit 18 kann aber auch fester Bestandteil des Laptops sein.

Wird die mobile Telekommunikationseinheit 18 aktiviert, beispielsweise bei einem Einschalten des Client 1b, meldet sich die Telekommunikationseinheit 18 bei der geografisch nächstliegenden Basisstation 21 an. Dazu wird eine sogenannte Netzsuche durchgeführt, bei der mittels der Sende- und Empfangsantenne 19 eine Anfrage gesendet wird. Die Basisstation 21, die dem Client 1b geografisch am nächsten ist, antwortet auf diese Anfrage und vermerkt intern die Sende- und Empfangsbereitschaft der Telekommunikationseinheit 18.

Auch in einer solchen in Figur 6 dargestellten Client-Server-Umgebung können die beschriebenen Verfahren zur Ausführung einer Suchanfrage realisiert werden. Dabei wird praktisch die Datenleitung 5 und das Telekommunikationsnetzwerk 6 aus Figur 1 durch die Funkübertragungsstrecke zwischen den Antennen 19, 20 ersetzt. Der Basisstation 21 ist eine eindeutige Kennung 22 zugeordnet, über die sie aus dem Client-Server-Netzwerk 10 heraus adressiert werden kann.

Mit dem beschriebenen Verfahren wird statt sämtlicher inhaltsgleicher bzw. inhaltsähnlicher Netzwerk-Seiten lediglich mindestens eine Netzwerk-Seite (sogenannte Haupt-Netzwerk-Seite) benutzt, zu der die auf den inhaltsgleichen bzw. inhaltsähnlichen Netzwerk-Seiten enthaltenen Querverweise (sogenannte Hyperlinks) hinführen. Dadurch kann verhindert werden, dass Anwender die Relevanz ihrer Netzwerk-Seiten dadurch steigern können, dass sie eine Vielzahl von inhaltsgleichen oder inhaltsähnlichen Netzwerk-Seiten erzeugen, die alle auf die ursprüngliche Netzwerk-Seite verweisen. Egal wie viele Abbilder von einer bestimmten Netzwerk-Seite in Form von weiteren inhaltsgleichen oder inhaltsähnlichen Neben-Netzwerk-Seiten in dem Client-Server-Netzwerk 10 vorhanden sind; in der Suchergebnisliste ist diese Netzwerk-Seite nur einmal enthalten, und zwar in Form der Haupt-Netzwerk-Seite.

Wenn beispielsweise ein online-shop für ein bestimmtes Produkt eine Netzwerk-Seite http://www.shop.de/produkt vorhält, ist es in der Praxis häufig so, dass er neben dieser Haupt-Netzwerk-Seite auch eine Vielzahl weiterer Neben-Netzwerk-Seiten mit einem Abbild der Haupt-Netzwerk-Seite unterhält, die beispielsweise folgende URLs aufweisen: http://shop1.shop.de/produkt; http://shop2.shop.de/produkt; http://shop3.shop.de/produkt; etc. Alle Neben-Netzwerk-Seiten weisen eine von der Haupt-Netzwerk-Seite verschiedene URL auf und verweisen mittels eines Querverweises auf die Haupt-Netzwerk-Seite, so dass man von der Neben-Netzwerk-Seite zu der Haupt-Netzwerk-Seite gelangt, bspw. durch einfaches Anklicken des auf der Neben-Netzwerk-Seite dargestellten oder beschriebenen Produkts.

Wenn nun eine Suchergebnisliste außer einem Platzhalter für die Haupt-Netzwerk-Seite auch weitere Platzhalter für die übrigen Netzwerk-Seiten enthält, die jedoch nichts anderes als Abbilder der Haupt-Netzwerk-Seite sind, so ist dies für den Benutzer 4a, 4b ärgerlich, da er viel Zeit investieren und umfangreiche Datenmengen über das Client-Server-Netzwerk 10 übertragen muss, um festzustellen, dass er stets bei dem gleichen online-shop landet. Hier kann das beschriebene Verfahren zur Auswahl einer bestimmten Netzwerk-Seite aus einer Vielzahl inhaltsgleicher oder inhaltsähnlicher Netzwerk-Seiten Abhilfe schaffen, da in der Suchergebnisliste nur die ausgewählten Haupt-Netzwerk-Seiten aufgeführt sind.

Es ist wünschenswert, eine Möglichkeit zu schaffen, die es trotz Einsatz des beschriebenen Verfahrens zur Auswahl der Haupt-Netzwerk-Seite ermöglicht, die Relevanz einer bestimmten Netzwerk-Seite zu verbessern. Dazu wird das erfindungsgemäße Verfahren vorgeschlagen, das vorsieht, dass außer der Haupt-Netzwerk-Seite weitere Netzwerk-Seiten vorgesehen sind, die Abbilder der Haupt-Netzwerk-Seite darstellen. Allerdings müssen diese zusätzlichen Netzwerk-Seiten unter der gleichen URL erreichbar sein, wie die Haupt-Netzwerk-Seite, um einen Ausschluss der Neben-Netzwerk-Seiten durch das beschriebene Auswahlverfahren zu verhindern. Das würde nach dem Stand der Technik jedoch erfordern, dass es sich bei den Neben-Netzwerk-Seiten um statische Seiten handelt, deren Inhalt komplett auf dem gleichen Server abgelegt ist, was praktisch kaum realisier wäre. Andererseits würde ein dynamisches Generieren der Neben-Netzwerk-Seiten zu einem Ausschluss durch die Suchmaschinen führen, da diese bekanntlich nur statische Netzwerk-Seiten berücksichtigen. Hier schafft die vorliegende Erfindung Abhilfe, indem die Neben-Netzwerk-Seiten zwar dynamisch generiert werden, aber nach außen hin ein statisches Erscheinungsbild haben.

In diesem Fall enthalten die zusätzlichen Neben-Netzwerk-Seiten zwar ebenfalls Verweise, die auf eine bestimmte Haupt-Netzwerk-Seite verweisen. Allerdings sind die URLs der zusätzlichen Netzwerk-Seiten zumindest bezüglich der Top-Level-Domain (shop.de) identisch mit der URL der Haupt-Netzwerk-Seite. In diesem Fall würden dann in der Suchergebnisliste alle inhaltsgleichen bzw. inhaltsähnlichen Netzwerk-Seiten, das heißt, die Haupt-Netzwerk-Seite und die Neben-Netzwerk-Seiten, berücksichtigt werden, da die Verweise in den Neben-Netzwerk-Seiten nicht auf eine andere Netzwerk-Seiten mit einer von der URL der Neben-Netzwerk-Seiten abweichenden URL verweisen.

Um den Speicherplatzbedarf auf dem Server 12 für die Mehrzahl an inhaltsgleichen Netzwerk-Seiten möglichst gering zu halten, wird vorgeschlagen, dass von der Haupt-Netzwerk-Seite keine statischen Neben-Netzwerk-Seiten erzeugt werden, sondern dass die Neben-Netzwerk-Seiten dynamisch generiert werden, jedoch äußerlich alle Eigenschaften von statischen Netzwerk-Seiten aufweisen und von der Suchmaschine 15a, insbesondere von dem Crawler im Rahmen der Ausführung des Verfahrens gemäß Figur 4 (des Crawling-Durchlaufs), als statische Netzwerk-Seiten interpretiert und entsprechend berücksichtigt und verarbeitet werden. Das heißt, der Inhalt der zusätzlichen Neben-Netzwerk-Seiten wird dynamisch generiert, wobei das äußere Erscheinungsbild der Netzwerk-Seiten, zumindest für die Suchmaschine 15a, 15b, statisch ist.

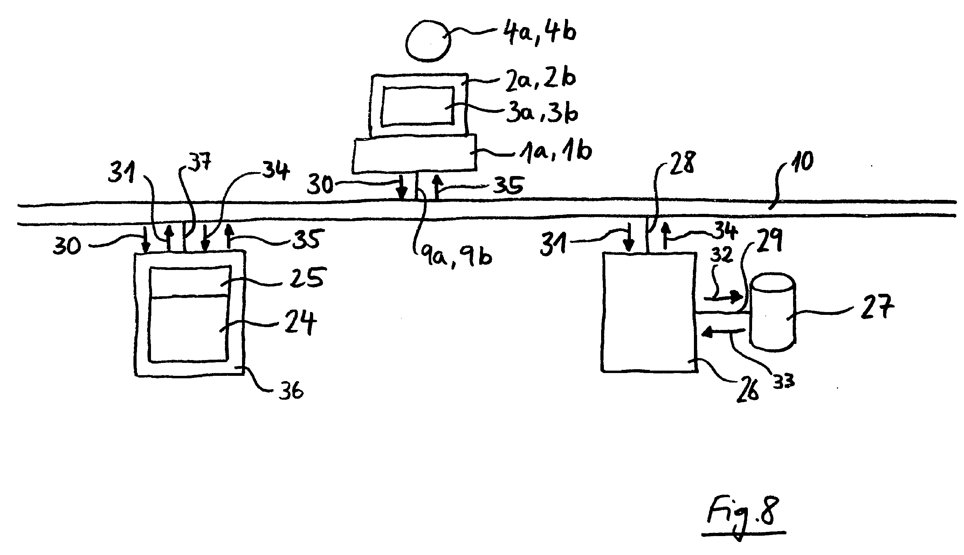

Eine Client-Server-Umgebung, in der das erfindungsgemäße Verfahren realisiert werden kann ist in Figur 8 dargestellt. Der Client 1a, 1b kann dabei auf beliebige Weise an das Client-Server-Netzwerk 10 angeschlossen werden, insbesondere wie in Figur 1 beschrieben über eine Datenleitung 5 und ein Telekommunikationsnetzwerk 6 oder aber wie in Figur 6 beschrieben über eine Funkstrecke über Sende-/Empfangsantennen 19, 20. Mit dem Bezugszeichen 36 ist ein Server bezeichnet, auf dem ein online-shop 24 realisiert ist. Der Server 36 ist über eine Datenleitung 37 mit dem Client-Server-Netzwerk 10 verbunden. Außerdem ist auf dem Server 36 eine rewrite-engine 25 in Form eines Scripts gespeichert.

Ein weiterer Server der dargestellten Client-Server-Umgebung ist mit dem Bezugszeichen 26 bezeichnet. Der weitere Server 26 ist über eine Datenleitung 28 an das Client-Server-Netzwerk 10 angeschlossen. Über den weiteren Server 26 kann auf eine Datenbank 27 zugegriffen werden, auf der mögliche Inhalte für Netzwerk-Seiten abgelegt sind. Eine Datenleitung zwischen dem weiteren Server 26 und der Datenbank 27 ist mit dem Bezugszeichen 29 bezeichnet. Der Server 26 ist insbesondere hinsichtlich der Netzwerk-Adresse bzw. IP-Adresse und/oder der Top-Level-Domain (TLD) unter einer anderen URL ansprechbar als der Server 36. Der Server 26 wird auch als hurra-Webserver bezeichnet.

Zur Realisierung des erfindungsgemäßen Verfahrens sendet der Benutzer 4a, 4b über den Client 1a, 1b eine Anfrage 30 nach einer bestimmten Netzwerk-Seite an den Server 36, bspw. durch Eingeben der entsprechenden URL in die Adresszeile des Browsers 3a, 3b und Absenden der URL. Die Anfrage 30 wird über das Client-Server-Netzwerk 10 an den Server 36 übermittelt. Die Anfrage 30 lautet bspw. http://www.shop.de/id_produkt, wobei "id_" eine eindeutige Kennung für die rewrite engine 25 ist. In dem Server 36 erkennt die rewrite engine 25, dass die Anfrage 30 die eindeutige Kennung umfasst und veranlasst den Server 36 die gewünschten Informationen aus der Datenbank 27 anzufordern.

Dazu sendet der Server 36 zunächst eine eigene Anfrage 31 an den weiteren Server 26, in der er um Übermittlung der Informationen zu dem Produkt (produkt), das Teil der Anfrage 30 ist, bittet. Die Anfrage 31 wird über das Client-Server-Netzwerk 10 an den weiteren Server 26 übermittelt. Die Anfrage 31 lautet bspw. http://www.server.de/produkt. In dem weiteren Server 26 wird die Anfrage in an sich bekannter Weise verarbeitet und eine Suchanfrage 32 an die Datenbank 27 übermittelt. Die Suchanfrage 32 kann bspw. in einer Datenbanksprache (z.B. SQL) abgefasst sein. Als Antwort auf die Suchanfrage 32 liefert die Datenbank 27 die gewünschten Informationen zu dem Produkt (33). Diese Informationen 33 werden dann in dem weiteren Server 26 in ein geeignetes Format zum Übertragen an den Server 36 umgewandelt und an diesen Übertragen (34).

Die Informationen 34 werden dann über das Client-Server-Netzwerk 10 an den Server 36 übermittelt. Dort wird anhand der Informationen 34 die Netzwerk-Seite bzw. deren Inhalt dynamisch aufgebaut. Die fertige Netzwerk-Seite bzw. deren Inhalt wird dann über das Client-Server-Netzwerk 10 an den Client 1a, 1b übertragen (35) und dort dem Benutzer 4a, 4b über den Monitor 2a, 2b ausgegeben.

In entsprechender Weise funktioniert das erfindungsgemäße Verfahren, wenn die Anfrage 30 nach der Netzwerk-Seite nicht von einem Benutzer 4a, 4b bzw. einem Client 1a, 1b, sondern von einer Suchmaschine 15a, 15b während des sog. Crawlens des Client-Server-Netzwerks 10 ausgesandt wird. Die Suchmaschine 15a, 15b ist auf einem Server 12 vorgesehen (vgl. Figur 1 und Figur 6), der ebenfalls an das Client-Server-Netzwerk 10 angeschlossen ist. Als Antwort auf die Anfrage 30 übermittelt der Server 36 dann die gewünschte Netzwerk-Seite 35 bzw. deren Inhalt an die Suchmaschine 15a, 15b, wo die Seite bzw. der Inhalt wie oben beschrieben verarbeitet wird (sog. indexing).

In einer Ausgestaltung dieses Verfahrens könnte beispielsweise auf der Haupt-Netzwerk-Seite des online-shops 24 (http://www.shop.de/) eine Kennung (z. B. id_) hinterlegt sein. Immer wenn die Haupt-Netzwerk-Seite in Verbindung mit der Kennung (z. B. http://www.shop.de/id_) aufgerufen wird, wird automatisch das Script der rewrite engine 25 aufgerufen, das die scheinbar statische aber tatsächlich dynamischen Netzwerk-Seite(n) erzeugt und übergibt. Auf diese Weise können also beim Aufruf der Haupt-Netzwerk-Seite mit der Kennung eine Vielzahl von Neben-Netzwerk-Seiten dynamisch erzeugt werden. Das Skript liefert vorzugsweise scheinbar statische Netzwerk-Seiten (z.B. HTML-Seiten) zurück, deren Inhalt jedoch dynamisch generiert wurde. Dazu greift das Skript beispielsweise auf die Datenbank 27 zu, in der sämtliche Produkte des online-shops 24 und entsprechende Informationen (Preise, Verfügbarkeit, ähnliche Produkte in dem online-shop 24, etc.) gespiegelt sind. Diese Datenbank 27 kann entweder von dem online-shop-Betreiber selbst und/oder von einem Drittanbieter erstellt und/oder gepflegt werden.

Ein konkretes Beispiel ist der Aufruf http://www.shop.de/id_jogginganzug.asp, wobei über die Kennung "id_" das Script gestartet wird. Das System 26, 27 liefert über die eindeutige Kennung Informationen über den Jogginganzug (z. B. in Form einer HTML-Seite) zurück.

Mit dem erfindungsgemäßen Verfahren können auch Suchmaschinenoptimierte Netzwerk-Seiten, die bspw. die Produkte des online-shops 24 enthalten, dynamisch generiert werden. Diese dynamisch generierten Netzwerk-Seiten werden von der Suchmaschine 15a, 15b gecrawlt und entsprechend verarbeitet. In der Datenbank der Suchmaschine 15a, 15b sind dann die dynamisch generierten Netzwerk-Seiten enthalten und aufgrund der Optimierung weit oben in der Suchergebnisliste aufgeführt. Bei der Eingabe eines entsprechenden Suchbegriffs (z.B. "produkt") durch einen Benutzer 4a, 4b liefert die Suchmaschine dann als Suchergebnisliste u.a. einen Verweis (Link) zu der entsprechenden nach dem erfindungsgemäßen Verfahren dynamisch generierten Netzwerk-Seite. Wenn der Benutzer diesen Verweis aktiviert, gelangt er auf die dynamisch generierte Netzwerk-Seite. Über einen weiteren Verweis auf der dynamisch generierten Netzwerk-Seite kann der Benutzer 4a, 4b dann zu der eigentlichen Netzwerk-Seite des Online-Shops 24 gelangen, ohne dass sich für ihn sichtbar etwas ändert, d.h. die eigentliche Netzwerk-Seite besitzt zumindest hinsichtlich der IP-Adresse und/oder der Top-Level-Domain die gleiche URL wie die dynamisch generierte Netzwerk-Seite. Zudem kann die eigentliche Netzwerk-Seite des online-shops 24 Benutzer-optimiert sein, so dass der darauf enthaltene Inhalt dem Benutzer 4a, 4b anschaulich und informativ präsentiert werden kann.

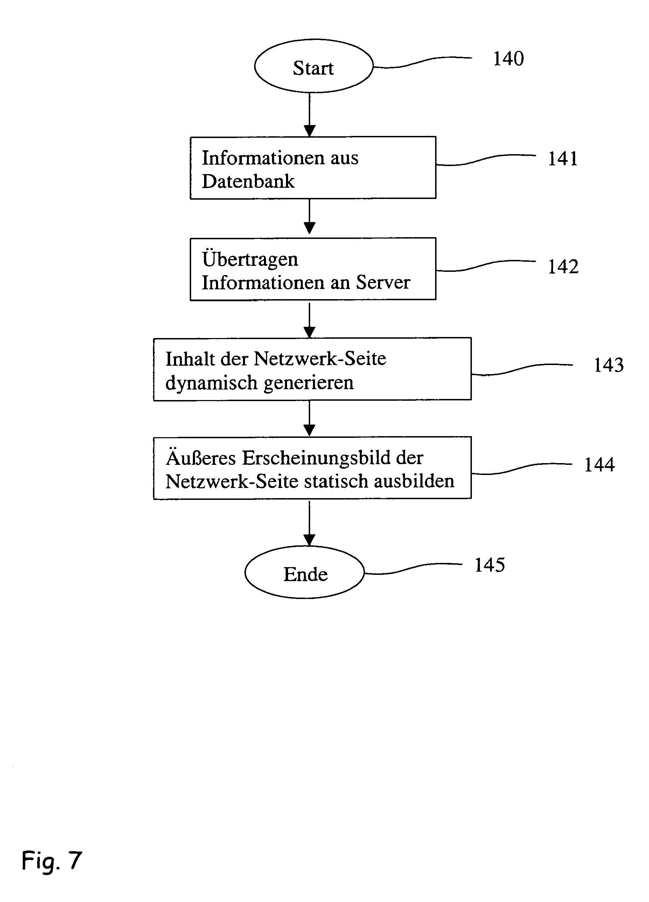

Durch das Skript werden also Netzwerk-Seiten mit einem dynamischen Inhalt crawler-konform erzeugt, so dass sie von Suchmaschinen 15a, 15b gecrawlt werden, obwohl ihr Inhalt streng genommen dynamisch erzeugt worden ist. Das merkt der Crawler aber nicht, da die Seite nach außen hin - zumindest aus Sicht des Crawlers - als eine scheinbar statische Netzwerk-Seite auftritt. Der Server 36 liefert also eine zwar dynamisch generierte, aber nach außen statisch erscheinende Netzwerk-Seite zurück. Diese Netzwerk-Seite kann von einem Crawler verarbeitet oder an einen Client 1a, 1b übertragen und dort mittels eines Browsers 3a, 3b auf einem Bildschirm 2a, 2b dargestellt werden. Eine derartige Netzwerk-Seite wird von einem geeigneten Server 36 des Client-Server-Netzwerks 10 erzeugt. Ein Ablaufdiagramm für ein entsprechendes erfindungsgemäßes Verfahren ist in Figur 7 dargestellt.

Das Verfahren beginnt in einem Funktionsblock 140. Es dient zum Erzeugen einer Netzwerk-Seite eines Client-Server-Netzwerks 10 mit einem bestimmten Inhalt. In einem ersten Schritt werden in einem Funktionsblock 141 aus der Datenbank 27, die über das Client-Server-Netzwerk 10 zugänglich ist, Informationen dynamisch entnommen. Die aus der Datenbank 27 entnommenen Informationen stellen zumindest einen Teil des Inhalts der Netzwerk-Seite dar. Die Datenbank 27 kann beispielsweise an den Server 36 zum Erzeugen der Netzwerk-Seite angeschlossen sein. Es ist aber auch denkbar, dass die Datenbank 27 über einen weiteren Server 26 an das Client-Server-Netzwerk 10 angeschlossen ist und der Server 36 zum Erzeugen der Netzwerk-Seite über das Client-Server-Netzwerk 10 und über den weiteren Server 26 Zugriff auf die Datenbank 27 hat und von dieser Informationen herunterladen kann.

In einem Funktionsblock 142 werden die entnommenen Informationen über das Client-Server-Netzwerk 10 an den Server 36 des Client-Server-Systems 10, der die Netzwerk-Seite erzeugt, übermittelt. In dem Server 36 wird in einem Funktionsblock 143 anhand der empfangenen Informationen der Inhalt der zu erzeugenden Netzwerk-Seite dynamisch generiert. Der Inhalt der Netzwerk-Seite kann dabei von einer einzigen Datenbank 27 oder von mehreren Datenbanken heruntergeladen werden. In dem zweiten Fall müsste der Server 36 dann die von den verschiedenen Datenbanken über das Client-Server-System 10 empfangenen Informationen zu dem gewünschten Inhalt der Netzwerk-Seite zusammensetzen.

Schließlich wird in dem Server 36 in einem Funktionsblock 144 das äußere Erscheinungsbild der dynamisch generierten Netzwerk-Seite derart ausgebildet, dass die Netzwerk-Seite zumindest aus Sicht einer Suchmaschine 15a, 15b als eine statische Netzwerk-Seite erscheint. Wie das äußere Erscheinungsbild der generierten Netzwerk-Seite im einzelnen ausgebildet werden muss, hängt von der Art und der Funktionsweise der Suchmaschine bzw. des Crawlers ab. Der Crawler fragt während des Crawling-Durchlaufs verschiedene Eigenschaften der Netzwerk-Seiten ab, anhand derer er ermittelt, ob es sich um eine statische oder eine dynamische Netzwerk-Seite handelt. Zumindest diese Eigenschaften der Netzwerk-Seite müssen derart ausgebildet werden, dass der Crawler den Eindruck hat, bei der Netzwerk-Seite handle es sich um eine statische Seite. In einem Funktionsblock 145 ist das erfindungsgemäße Verfahren beendet.

Die dynamisch generierte Netzwerk-Seite wird zur Weiterverarbeitung an eine Einheit zurückgegeben, die die Netzwerk-Seite angefordert hat. Das kann bspw. der Crawler der Suchmaschine 15a 15b oder der Browser 3a, 3b eines Client 1a, 1b sein. Im ersten Fall wird die Netzwerk-Seite in der Adress-Datenbank 14 der Suchmaschine 15a, 15b indiziert und im zweiten Fall wird die Netzwerk-Seite über einen Bildschirm 2a, 2b des Client 1a, 1b ausgegeben.

Selbstverständlich lässt sich dieses Verfahren des dynamischen Aufsetzens von scheinbar statischen, aber dynamisch erzeugten Netzwerkseiten nicht nur auf Neben-Netzwerk-Seiten, sondern auch auf Haupt-Netzwerk-Seiten anwenden.

Die scheinbar statischen, aber tatsächlich dynamischen Netzwerk-Seiten können je nach Crawler unterschiedlich reagieren. Während des Crawler-Durchlaufs der Netzwerk-Seiten könnte erkannt werden, um welchen Crawler einer Suchmaschine 15a, 15b es sich handelt. Da sich die verschiedenen Crawler und insbesondere die dahinter stehenden Suchmaschinen 15a, 15b unterscheiden, bspw. hinsichtlich der Erzeugung von Trefferlisten und hinsichtlich der Reihenfolge der Treffer in der Trefferliste, ist es sinnvoll, die dynamisch erzeugten Neben-Netzwerk-Seiten auf den erkannten Crawler bzw. die entsprechende Suchmaschine 15a, 15b anzupassen, damit die Neben-Netzwerk-Seite möglichst weit oben auf einer Trefferliste erscheint. Denkbar wäre es beispielsweise, die Verknüpfungen, die Titelbeschreibung, die Keyword-Dichte, die Querverweise (Verlinkungen) auf den Neben-Netzwerk-Seiten in Abhängigkeit von dem erkannten Crawler bzw. der dahinterstehenden Suchmaschine 15a, 15b zu variieren, immer mit dem Ziel später eine optimale Platzierung in einer Ergebnisliste der Suchmaschine 15a, 15b zu erzielen.

## Patentansprüche

1. Verfahren zum Erzeugen einer Netzwerk-Seite eines Client-Server-Netzwerks (10) mit einem bestimmten Inhalt, bei dem ein Server (36) des Client-Server-Systems (10) von einem Client (1a, 1b; 15a, 15b) des Client-Server-Netzwerks (10) eine Anfrage mit einer Netzwerk-Adresse (URL) der Netzwerk-Seite empfängt, **dadurch gekennzeichnet, dass**
- von dem Server (36) aus einer Datenbank (27), die über das Client-Server-Netzwerk (10) zugänglich ist, Informationen angefordert werden, die zumindest einen Teil des Inhalts der Netzwerk-Seite darstellen; und
- die angeforderten Informationen über das Client-Server-Netzwerk (10) an den Client (1a, 1b; 15a, 15b) übermittelt werden,
- wobei die angeforderten Informationen unter der Netzwerk-Adresse und/oder der Top-Level-Domain des Servers (36) an den Client (1a, 1b) übermittelt werden.

2. Verfahren nach Anspruch 1, **dadurch gekennzeichnet, dass** der Client (1a, 1b) ein Computer ist, der mit dem Client-Server-Netzwerk (10) in Verbindung steht, über den die übermittelten Informationen mittels eines Browsers (3a, 3b) auf einem Ausgabegerät (2a, 2b) ausgegeben werden.

3. Verfahren nach Anspruch 1, **dadurch gekennzeichnet, dass** der Client (15a, 15b) eine als Computerprogramm ausgebildete Suchmaschine ist, die auf einem Server (12) abläuft, der mit dem Client-Server-Netzwerk (10) in Verbindung steht, wobei die Suchmaschine (15a, 15b) die übermittelten Informationen nach Schlüsselworten kategorisiert und zusammen mit den entsprechenden Netzwerk-Adressen in einer Datenbank abgelegt.

4. Verfahren nach einem der Ansprüche 1 bis 3, **dadurch gekennzeichnet, dass**
- die angeforderten Informationen über das Client-Server-Netzwerk (10) an den Server (36) übermittelt werden; und
- in dem Server (36) anhand der empfangenen Informationen der Inhalt der Netzwerk-Seite dynamisch generiert wird.

5. Verfahren nach Anspruch 4, **dadurch gekennzeichnet, dass** in dem Server (36) das äußere Erscheinungsbild der dynamisch generierten Netzwerk-Seite derart ausgebildet wird, dass die Netzwerk-Seite zumindest aus Sicht des Client (1a, 1b; 15a, 15b) als eine statische Netzwerk-Seite erscheint.

6. Verfahren nach einem der Ansprüche 1 bis 5, **dadurch gekennzeichnet, dass** die Informationen, die zumindest einen Teil des Inhalts der Netzwerk-Seite darstellen, in einer von einem weiteren Server (26) des Client-Server-Netzwerks (10) verwalteten Datenbank (27) abgelegt sind und der Server (36) zur Anforderung der Informationen über das Client-Server-Netzwerk (10) eine Anfrage mit einer Netzwerk-Adresse (URL) des weiteren Servers (26) an diesen sendet.

7. Verfahren nach einem der Ansprüche 1 bis 6, **dadurch gekennzeichnet, dass** die Anfrage des Client (1a, 1b; 15a, 15b) nach Informationen der Netzwerk-Seite neben der URL der Netzwerk-Seite auch eine eindeutige Kennung umfasst, welche den Server (36) veranlasst, die Informationen aus der Datenbank (27) anzufordern.

8. Verfahren nach Anspruch 7, **dadurch gekennzeichnet, dass** die in der Anfrage des Client (1a, 1b; 15a, 15b) nach Informationen der Netzwerk-Seite enthaltene und von dem Server (36) empfangene eindeutige Kennung den Server (36) veranlasst, ein auf dem Server (36) abgespeichertes Script abzuarbeiten, wobei bei Abarbeitung des Scripts auf dem Server (36) diesen veranlasst, die Informationen aus der Datenbank (27) anzufordern.

9. Verfahren nach Anspruch 8, **dadurch gekennzeichnet, dass** das Script den Server (36) veranlasst, anhand der empfangenen Informationen den Inhalt der Netzwerk-Seite dynamisch zu generieren.

10. Verfahren nach Anspruch 8 oder 9, **dadurch gekennzeichnet, dass** das Script den Server (36) veranlasst, die angeforderten Informationen unter der Netzwerk-Adresse und/oder der Top-Level-Domain des Servers (36) an den Client (1a, 1b) zu übermitteln.

11. Server (36) eines Client-Server-Netzwerks (10) zum Erzeugen einer Netzwerk-Seite des Client-Server-Netzwerks (10) mit einem bestimmten Inhalt, wobei der Server (36) Mittel zum Empfangen einer eine Netzwerk-Adresse (URL) der Netzwerk-Seite umfassenden Anfrage von einem Client (1a, 1b; 15a, 15b) des Client-Server-Netzwerks (10) aufweist, **dadurch gekennzeichnet, dass** der Server (36)
- Mittel zur Anforderung von Informationen der Netzwerk-Seite aus einer Datenbank (27), die über das Client-Server-Netzwerk (10) zugänglich ist, aufweist, wobei die Informationen zumindest einen Teil des Inhalts der Netzwerk-Seite darstellen;
- Mittel zum Empfangen der angeforderten Informationen über das Client-Server-Netzwerk (10) aufweist;
- Mittel zum dynamischen Generieren des Inhalts der Netzwerk-Seite anhand der empfangenen Informationen aufweist; und
- Mittel zur Übermittlung des dynamisch generierten Inhalts der Netzwerk-Seite an den Client (1a, 1b; 15a, 15b) aufweist,
- wobei die Generierungsmittel den Inhalt der Netzwerk-Seite derart generieren und die Übermittlungsmittel den Inhalt der Netzwerk-Seite derart an den Client (1a, 1b; 15a, 15b) übermitteln, dass der Inhalt der Netzwerk-Seite unter der Netzwerk-Adresse und/oder der Top-Level-Domain des Servers (36) an den Client (1a, 1b; 15a, 15b) übermittelt wird.

12. Server (36) nach Anspruch 11, **dadurch gekennzeichnet, dass** der Server Mittel zur Ausführung eines Verfahrens nach einem der Ansprüche 5 bis 10 aufweist.

13. Server (36) nach Anspruch 11 oder 12, **dadurch gekennzeichnet, dass** die Mittel zur Ausführung des Verfahrens als ein auf dem Server (36) abgespeichertes Script ausgebildet sind.
